Europäisches Patentamt

European Patent Office

Office européen des brevets

(11) Publication number: **0 099 955**
**A1**

## EUROPEAN PATENT APPLICATION

(21) Application number: **82401405.4**

(22) Date of filing: **28.07.82**

(51) Int. Cl.³: **G 09 B 19/08,** G 09 B 17/00

(43) Date of publication of application: **08.02.84**
**Bulletin 84/6**

(84) Designated Contracting States: **FR GB IT**

(71) Applicant: **Chen, Ai-Wen, 265 rue du Faubourg Saint-Antoine, F-75011 Paris (FR)**
Applicant: **Zhou, Jing-Zi, 265 rue du Faubourg Saint-Antoine, F-75011 Paris (FR)**

(72) Inventor: **Chen, Ai-Wen, 265 rue du Faubourg Saint-Antoine, F-75011 Paris (FR)**
Inventor: **Zhou, Jing-Zi, 265 rue du Faubourg Saint-Antoine, F-75011 Paris (FR)**

(54) **Pronunciation-showing type faces.**

(57) Technical field: The application of linguistics to publishing. Technical features: Chinese characters cannot show pronunciation, neither can English letters show pronunciation exactly. To know their pronunciation, we have to depend on phonetic symbols or letters (for Chinese, there are Chinese phonetic letters, both old and new; for English, there are many sets of symbols, of which the international phonetic symbols and Webster's are the most widely used). But these symbols or letters can only be used in dictionaries, not suitable for textbooks or readers of any kind. Some Chinese publications have phonetic letters printed between lines, thus causing much trouble both to printing and reading, and so have failed to be widely accepted. Pronunciation-showing type faces can show pronunciation through letters or characters themselves, characterized as follows: For the Chinese characters, a set of stroke letters have been designed to represent the initial consonant, the "yunmu" and the tone, and these stroke letters are set in Chinese characters to show their pronunciation. For the English letters, there are two methods. The first is that a letter with a variety of possible pronunciations is marked heavier in different parts to show its different pronunciations, but with its original form unchanged. The second is that the vowel letters are classified and given classifying marks to show different pronunciations. The English letters after treatment by the above methods are capable of showing an accurate pronunciation.

Uses: The invented type faces may be used to publish both Chinese and English textbooks and readers of all kinds, which will facilitate a fine command of the pronunciation of the two languages and will facilitate the memorizing of new words of English as well.

ACTORUM AG

## PRONUNCIATION-SHOWING TYPE FACES

The divorce of pronunciation from letters is a problem common to all languages, especially to Chinese and English. Chinese characters are not phonetic by origin. English, though phonetic letters, is nevertheless incapable of showing pronunciation accurately. To learn writing systems of such languages, phonetic transcriptions are indispensable. Transcriptions can only be applied in dictionaries, they are not suitable for readers of any kind. For example, some Chinese text-books have transcriptions interlined, thus causing a lot of inconvenience in the process of printing and reading. By the end of the 19th century, a number of Chinese scholars had already made initial efforts towards the reform of the old Chinese writing system and the popularization of new ones. During the last 30 years or so, the reform has been firmly supported all along by the government. However, even now, it cannot progress substantially. The distinguished British writer, Bernard Shaw, advocated energetically the replacement of the existing English writing system by a new alphabet and new ways of spelling. He even dedicated part of his legacy to the English writing-system reform. But so far, very little progress, if any, has been made. Histories of all the writing-system reformations carried out whether in China, or in other countries, tell that it is almost impossible for big, culturally-developed countries to adopt a new writing system by wholely abolishing the old one, because such a change would inevitably impose a change on the habits of millions of people formed through long years. This does not mean that no change at all is admitted.

There are two forms of letters, the handwritten and the printed. It is quite possible to make appropriate alterations in the printed form. Lots of printed forms have been designed, however, these designs were made just to give **letters** an artsitic look. Ours serve a different purpose. They are intended to show pronunciation, and are named "pronunciation-showing type faces".

- 2 -

ENGLISH PRONUNCIATION-SHOWING TYPE FACES

Draft I: Showing Pronunciation through
"Letter·Phoneme" Units

The research of rules governing the pronunciation of English words can hardly result in the solution of the problem, if our attention is directed to only the letters or only the sounds. Both letters and sounds must be taken into consideration simultaneously as two related aspects of one object, inseparable from each other. For example, the letter "e" has four different pronunciations: [iː], [e], [ə], [ɪ]  and therefore, four different "letter·phoneme" units are formed: e[iː], e[e], e[ə], e[ɪ]. The sound [ɪ] is the pronunciation of four different letters: e, i, y, a, and there are accordingly four different "letter·phoneme" units: e[ɪ] , i[ɪ] , y[ɪ] , a[ɪ]. Though pronounced in the same way, all the four have their own respective reading rules, different from each other, that should be studied separately.

In actual words, a letter that may be pronounced in several ways is marked heavier on different parts so as to show its different pronunciations; silent letters are represented by fine lines.

Section I: Vowels and Consonants

1. Vowel and semi-vowel letters

Table I: Single Vowel Letters

| letters | pronun-ciation | transcrip-tion | example |
|---|---|---|---|
| | [eɪ] | a A | name NAME [neɪm] |
| | [æ] | a A | have HAVE [hæv] |
| | [ɑ:] | a A | fast FAST [fɑ:st] |
| | [ə] | a A | about ABOUT [ə'baut] |
| | [ɪ] | a A | village VILLAGE ['vɪlɪdʒ] |
| a | [ɒ] | | yacht YACHT [jɒt] |
| | | | quality QUALITY ['kwɒlɪtɪ] |
| | | | daub DAUB [dɔ:b] |
| | | a A | law LAW [lɔ:] |
| | [ɔ:] | (1) | war WAR [wɔ:] |
| | | | talk TALK [tɔ:k] |
| | | | alter ALTER ['ɔ:ltə] |
| | [əu] | o O | no NO [nəu] |
| | [ʌ] | o O | son SON [sʌn] |
| | [u:] | o O | move MOVE [mu:v] |
| o | [ə] | o O | produce PRODUCE [prə'dju:s] |
| | [ɒ] | | not NOT [nɒt] |
| | [ɔ:] | o O | or OR |
| | | (2) | course COURSE |
| | [ju:] | u U | hue HUE [hju:] |
| | [jʊ] | u U | occupy OCCUPY ['ɒkjupaɪ] |
| | [u:] | u U | sue SUE [su:] |
| u | [ʌ] | u U | sun SUN [sʌn] |
| | [ə] | u U | support SUPPORT [sə'pɔ:t] |
| | [ʊ] | u U | put PUT [put] |
| | [w] | | quill QUILL [kwɪl] |

BAD ORIGINAL

| letters | pronun-ciation | transcrip-tion | example |
|---|---|---|---|
| e | [iː] | e  E | he  HE  [hiː] |
|  | [e] | e  E | pen  PEN  [pen] |
|  | [ə] | e  E | open  OPEN  [ˈəupən] |
|  | [ɪ] | e  E | delay  DELAY  [dɪˈlei] |
| i | [aɪ] | i  I | tie  TIE  [tai] |
|  | [iː] | i  I | ski  SKI  [skiː] |
|  | [ɪ] | i  I | omit  OMIT  [əuˈmit] |
|  | [I] | i  I | mistake  MISTAKE  [misˈteik] |
|  | [ə] | i  I | holiday  HOLIDAY  [ˈholədi] |
| y | [I] | y  Y | city  CITY  [ˈsiti] |
|  | [aɪ] | y  Y | by  BY  [bai] |
|  | [j] | | yes  YES  [jes] |
| w | [w] | w  W | we  WE  [wiː] |
|  | [-ʊ] | w  W | now  NOW  [nau] |

Notes

(1) "a": pronounced [ʋ] or [ɔː]

"a" is pronounced [ʋ] except when either of the following two
conditions appears: followed by a/ a silent "-u", "-w", "-r",
"-l", or b/ a "l", which is not an element of the next syllable. In the above-mentioned two cases, "a" is pronounced [ɔː].
But when followed by a "l", which belongs to the next syllable,
it is pronounced [ʋ], too. For example, "quality [ˈkwʋliti]".

(2) "o": pronounced [ʋ] or [ɔː]

"o" is pronounced [ʋ]. Only when followed by a silent "r" or
"-ur", is the letter pronounced [ɔː].
As regards the pronunciation of the letter "o" before a voiced
"r", see 4.

2. Vowels peculiar to American pronunciation:
"a[a]": transcribed in the same way as the "a[aː]" in British
pronunciation, but uttered with shorter length. [aː] is a long
vowel whereas [a] is a short one.
"o[a]": transcribed as "o", uttered in the same way as the
"a[a]" in American pronunciation.
"a[ɔ]": transcribed in the same way as "a [ʋ,ɔː]", but uttered

differently, "a[ɔ]" makes smaller opening than [ɒ], the same opening as [ɔ:]; [ɔ:] is a long vowel whereas [ɔ] is a short one. "0[ɔ]": with the same transcription as the "0[ɒ,ɔ:] in British pronunciation and the same pronunciation as the "a[ɔ]" in American.

3. Vowel-letter combinations:

Table II

| letters | Pronunciation | transcription | example |
|---|---|---|---|
| o o | [u:] | oo OO | root ROOT [ru:t] |
| | [ʊ] | oȯ OȮ | book BOOK [bʊk] (1) |
| o a | [ɔ:] | oa OА | broad BROAD [brɔ:d] |
| o i | [ɔI] | oi OI | oil OIL [ɔil] |
| o y | | oy OY | boy BOY [bɔI] |
| o u | [aʊ] | ou OU | loud LOUD [laʊd] |
| o w | | ow OW | now NOW [naʊ] (2) |
| e w | [ju:] | ew EW | new NEW [nju:] |
| | [jʊ-] | ew- EW- | steward STEWARD [stjʊəd] |
| | [əʊ] | ew EW | sew SEW [səʊ] . |

Notes:

(1) The single letter "ȯ" is pronounced [u:]. The letter combination "oo" is transcribed "oo" if pronounced [u:]; when it is uttered [ʊ], the second "o" is thickened: "oȯ". The single letter "o" being pronounced [ʊ] is a rare case and treated as such. See 8.

(2) The single letter "ɔ" is pronounced [ɒ] or [ɔ:]. The vowel combination "OU", "OW" is pronounced [aʊ].

4. The consonant and non-independent vowel "r"

0099955

- 6 -

| | | British pronunciation | | | American pronunciation | | | |
|---|---|---|---|---|---|---|---|---|
| | pronun-ciation | transcrip-tion | example | example | transcrip-tion | pronun-ciation | | |
| consonant | [r] | r R | re RE [ri:] | | | | | |
| non-independent vowel | [ə] | r R | latter -ER [ˈlætə]<br>sir -IR [sə]<br>forget FOR- [fəˈget]<br>theatre -RE [ˈθiətə] | latter -ER [ˈlætər]<br>sir -IR [sər]<br>forget FOR- [fərˈget]<br>theater -ER [ˈθiətər] | r R | [ər] | | non-independent vowel + consonant |
| | [з:] | -r -R | her -ER [hз:]<br>sir -IR [sз:]<br>word -ORD [wз:d]<br>burn -URN [bз:n]<br>learn -EARN [lз:n] | her -ER [hзr]<br>sir -IR [sзr]<br>word -ORD [wзrd]<br>burn -URN [bзrn]<br>learn -EARN [lзrn] | -r -R | [зr] | | |
| | [~ə] | ~r ~R | ear EAR [iə]<br>beer -EER [biə]<br>poor -OOR [puə]<br>wear -EAR [weə] (1)<br>fire -IRE [faiə]<br>pure -URE [pjuə]<br>our OUR [auə]<br>power -OWER [pauə]<br>lower -OWER [ləuə]<br>layer -AYER [leiə] | ear EAR [iər]<br>beer -EER [biər]<br>poor -OOR [puər]<br>wear -EAR [weər]<br>fire -IRE [faiər]<br>pure -URE [pjuər]<br>our OUR [auər]<br>power -OWER [pauər]<br>lower -OWER [ləuər]<br>layer -AYER [leiər] | ~r ~R | [~ər] | | |
| non-independet vowel + consonant | [ər] | r R | hero HERO [ˈhiərəu]<br>juror JUROR [ˈdʒuərə]<br>irony IRONY [ˈaiərəni]<br>fury FURY [ˈfjuəri]<br>mary MARY [ˈmeəri] | | | | | consonant |
| | [ɔ:r] | | story STORY [ˈstɔ:ri]<br>oral ORAL [ˈɔ:rəl] (2) | story STORY [ˈstɔri]<br>oral ORAL [ˈɔrəl] | r R | [r] | | |

- 7 -

Notes

(1) The single letter "ə" is pronounced [æ]. But the combination "əl" is pronounced [eə] ( in some dictionaries it is transcried [ɛə] ) instead of [æə], e.g. wear [weə].

(2) When "r [-ər-]" is preceded by the vowel "ɒ"; the element [ə] is not uttered, "ɒ" is pronounced the long vowel [ɔ:], "-ɒr-" is pronounced [ɔ:] + [r-] instead of [ɒ] + [ər] . For example, "story" has ['stɔ:rɪ] as its pronunciation instead of ['stɒərɪ] . In American, this word is uttered ['stɔrɪ]. That's why it is transcribed "story" instead of "stɒry".

5. Consonant letters with different pronunciations:

Table Ⅳ  Consonant letters having different transcriptions
for different pronunciations

| letter | pronun-ciation | transcription | example | condition |
|---|---|---|---|---|
| g | [g] | g G | get GET [get] | |
| | [ʒ] | | garage GARAGE ['gæra:ʒ] | ge (1) |
| | [dʒ] | g G | large LARGE [la:dʒ] | |
| | [s] | | base BASE [beɪs] | |
| S | [ʃ] | s S | Russia RUSSIA ['rʌʃə] | -ia . ie . io [ə] |
| | | | mansion MANSION ['mænʃən] | -u [u] -ure [uə] |
| | | | sure SURE [ʃuə] | |
| | | | suger SUGER ['ʃugə] | (2) |
| | [z] | | is IS [ɪz] | |
| | [ʒ] | s S | leisure LEISURE ['leʒə] | -io [ə] |
| | | | casual CASUAL ['kæʒuəl] | -ure [ə], -ual [uəl] |
| | | | occasion OCCASION [ə'keɪʒən] | |
| X | [ks] | x X | exit EXIT ['eksɪt] | |
| | [kʃ] | | complexion COMPLEXION [kəm'plekʃən] | -io [ə] (1) |
| | [gz] | x X | exact EXACT [ɪg'zækt] | |
| | [z] | | xenon XENON ['zenɒn] | x- |

- 8 -

Table V  Consonant letters with the same transcription
for different pronunciations

| letters | pronun-ciation | example | condi-tion |
|---|---|---|---|
| c  C | [k] | cab CAB [kæb]<br>bloc BLOC [blɔk]<br>cry CRY [kraɪ] | -a,o,u<br><br><br>(3) |
| | [s] | nice NICE [naɪs]<br>city CITY [sɪtɪ]<br>bicycle BICYCLE [baɪsɪkl] | -e,i,y |
| | [ʃ] | official OFFICIAL [əˈfɪʃəl]<br>sufficient SUFFICIENT [səˈfɪʃənt]<br>precious PRECIOUS [ˈpreʃəs]<br>ocean OCEAN [ˈəuʃən]<br>specie SPECIE [ˈspiːʃɪ] | -ia,ie,io<br>-ea [ə]<br><br><br>-ie [ɪ]  (2) |
| t  T | [t] | tea TEA [tiː] | |
| | | tree TREE [triː] | |
| | [tʃ] | picture PICTURE [ˈpɪktʃə]<br>righteous RIGHTEOUS [raɪtʃəs] | -ure,eou<br>[ə]<br>(2) |
| | [ʃ] | essential ESSENTIAL [ɪˈsenʃəl]<br>patient PATIENT [ˈpeɪʃənt]<br>ambitious AMBITIOUS [æmˈbɪʃəs]<br>fiction FICTION [ˈfɪkʃən]<br>initiate INITIATE [ɪˈnɪʃɪeɪt] | -ia,ie,io[ə]<br><br>(2)<br><br><br>-ia [ɪeɪ] |
| d  D | [d] | gradual GRADUAL [ˈgrædjuəl] | -u [juː] |
| | [dʒ] | gradual GRADUAL [ˈgrædʒuəl] | -u [u] |
| z  Z | [z] | zoo ZOO [zuː] | |
| | [ʒ] | azure AZURE [ˈæʒə] | -ure [ə] (2) |
| n  N | [n] | no NO [nəu] | |
| | [ŋ] | ink INK [ɪŋk] | -k,g |

- 5 -

Notes

(1) " ȝ " is pronounced [dʒ] when followed by a silent "e". " g " is originally pronounced [g]; if a silent "e" follows, it is pronounced [ʒ], for "ge" can never be pronounced [g].

(2) When "s " or "c" is pronounced as [ʃ]; "x" as [kʃ]; "t" as [tʃ] or as [ʃ] ;"z" or "s" as [ʒ], these consonants are being weakened. The weakening of consonants often coincides with that of vowels. Therefore, the pronunciation of consonants can be determined by the weakening of the preceding or following vowels.

a/ When"-ia, -ie , -io , -ea" is pronounced [ə], the preceding consonant "s", "c" or"t" is pronounced as [ʃ] and "x"as [kʃ].

b/ When "-i" is pronounced [I] and followed by a vowel, the "t" or "c" preceding it is pronounced [ʃ].

c/ When "- ie , -eo " is pronounced [ə],the "t", "s" and "z" that precede these letter combinations are pronounced as fol‑ lows: "t" as [tʃ], "s" as [ʃ] and "z" or "s" as [ʒ].

d/ When "-ion" is pronounced [ən], the preceding " s " is pro‑ nounced [ʒ].

e/ When "-u" is prnounced [ə], the preceding "x" is pronounced [kʃ] .

Where there is no weakening of the above-mentioned vowel letter combinations, there is no weakening of consonants. For example, srciety[sə'saiəti]

f/ When pronounced [U], "u" is a weak vowel to some extent. Only the consonant "s" "t" or "d" will get weakened if follow‑ ed by this "u": "s" is pronounced as [ʃ], "t" as [tʃ], "d" as [dʒ],( but "t" and "d" can also keep its unweakened pronunci‑ aton [tjU-] and [djU-] ).

(3) "c" is pronounced [k] when followed by -a, -o, -u, or by other consonants, or standing at the end of a word. It is pronounced [s] when followed by -e, -i, -y.

- 10 -

6. Consonant letters  that have only one pronunciation each:
b[b] , f[f] , h[h] , j[dʒ] , k[k] , l[l] , m[m] , p[p] , q[k] ,
v[v] . Some of them, however, have pronunciational exceptions.
For instance, "of" is uttered [ɒv], and the suffix "-ed" is
pronounced [ɪt] instead of [ɪd], if preceded by a voiceless consonant (except "t"). The solution of these problems can be
found in reading rules and so no special transcriptions are
provided.

7. Consonant-letter combinations:
Table Ⅵ

| letter | pronun-ciation | transcription | | example |
|---|---|---|---|---|
| ch | [tʃ] | ch | CH | cheek  CHEEK [tʃiːk] |
|  | [k] | ch | CH | echo  ECHO [ˈekəʊ] |
|  | [ʃ] | ch | CH | machine  MACHINE [məˈʃiːn] |
| cc | [ks] | cc | CC | accept  ACCEPT [əkˈsept] |
|  | [k] | cc | CC | acclaim  ACCLAIM [əˈkleɪm] |
| th | [θ] | th | TH | thin  THIN [θɪn] |
|  | [ð] | th | TH | then  THEN [ðen] |
|  | [t] | th | TH | Thai  THAI [taɪ] |
| wh | [w] | wh | WH | why  WHY [waɪ] |
|  | [h] | wh | WH | whole  WHOLE [həʊl] |
|  | [hw] | wh | WH | why  WHY [hwaɪ] |

8. Some of the letters which have pronunciational exceptions
in certain words are given no special transcriptions, because
they exist only in a very small number of words. all the letters in these words are represented in fine strokes. If transcription is indispensable, the mark ȯ is used to show the
exceptional pronunciation, for example,
any [ˈenɪ] woman [ˈwʊmən] women [ˈwɪmɪn] bury [ˈberɪ] busy [ˈbɪzɪ]

Section II: Stress

9. Most    English words have only one stressed syllable each. But a number of compound words have two syllables stressed. The stress rules for double-stressed words are too complicated to remember. Therefore, the rear-stress mark "□" is put on the second stress so that the first stress can remain unmarked. For example, herewith [ˈhɪəˈwɪð]

In words that have both primary and secondary stresses the position of the secondary stress can be determined by that of the primary one and needs no marking either. After trearment by the method provided in this  draft, i.e. showing pronunciation by "letter-phoneme" units, the word stress is mostly found in a regular position. An irregularly stressed syllable is made to carry a stress mark on its vowel.

10. The key factor that determines stresses is the stressed syllable's position and its "shift". A disyllabic word has its stress on the last syllable but one. A polysyllabic word  has its stress on the last syllable but two. These two positions are designated " stress positions". If a weak syllable    is found on the stress position, there occurs the shift of stress, for a weak syllable cannot be a stress.

11. A syllable which has a weak vowel or a weak consonant is a weak syllable.

(1) Weak vowels:

a/ Vowels that are all pronounced [ə] :

    a, e, i, o, u, y

    ou, oa, ua...

    ar, er, or, ir, ur, yr, our, ure...

    ia, ie, io

b/ a [ɪ] , e [ɪ] , i [ɪ]

c/ u [jʊ]

d/ ia [ɪə], ie [ɪə] , io [ɪə] , iu [ɪə] , iou [ɪə]

(2) Weak consonants:

a/ t [ʃ], s [ʃ], c [ʃ], x [kʃ] ("sh [ʃ] " is not a weakened sound and cannot be included in this group.)

b/ z [ʒ] , ⁓ [ʒ]

- 12 -

c/ t[tʃ] ("ch[tʃ] "is not a weakened sound, and cannot be included in this group.)

d/ d[dʒ] , ("j[dʒ] " isn't a weakened sound, and can not be included in this group).

(3) With no vowel taking part, the consonant "l", "m" or "n" may form a weak syllable with another consonant.

12. If a disyllabic or trisyllabic word has a weak syllable on its stress position, the stress will be shifted backward. For example, about[ə'baut] bewilder [bɪ'waɪldə]

If all the syllables of a word are weak ones, the stress remains on the stress position. For example, England['ɪŋglənd]

If a polysyllabic word has a weak syllable on its stress position, the stress will be shifted onward. For example,

elevator['elə̱veɪtə] capitalism ['kæpɪ̱təlɪzm]

Sometimes, a polysyllabic word with a weak syllable on its stress position has its stress shifted backward to the last but one syllable instead of forward.In this case, a mark is placed on the stress so as to save the trouble in memorizing the rules. For example, comprehènsive [kɒmprɪ'hensɪv]

13. The following are more decisive conditons than the stress position and its shift in determing the stress of a word.

(1) The following syllables must be stresses:

a/ A syllable with the vowel "i" transcribed as " ɪ̡ "

b/ a syllable with "x" uttered as [gz]-( The "x" is transcribed as " x ". For example. exasperating[ɪg'zɑːspəreɪtɪŋ]

(2) Syllables preceding the following syllables must be stresses:

a/ A syllable composed of a weak consonant and a weak vowel. For example; recollect[rekə'lekʃən]

b/ A syllable composed of a diphthong [ɪə], but without "r"; They are -ia, -ie, -io,-ea, - eo. For example,utopia[juː'təupɪə]

c/ A syllable with "-ic [ɪk]", "-ics[ɪks]" at the end. For example, antartic[æn'tɑːktɪk] . If the syllable before "-ic" or "-ics" is a weak one, the stress falls on the syllable right before the very weak syllable. For example, lunatic['luːnətɪk] .

- 13 -

(1) b/ and (2) a/ often exist in the same word. In this case,
(2) a/ is the determining factor. For example, existential
[,egzɪ'stenʃəl].
The stress of a word cannot be determined by the stress position and its shift unless none of the above-mentioned conditions exists.


15. Exceptions to the above-stated rules are given the stress
mark ⌐. For example, Europèan[juərə'pɪən].


        Draft II  The Method of Showing Pronunciation
                through Vowel Classification


1. The complexity of English pronunciation lies mainly in
vowels. Consonants have only a few pronunciation variations.
It is the method of showing pronunciation through vowel classification to classify "vowel letter phoneme" units and place
classifying marks on vowel letters so as to show their diffe-
rent pronunciations.

2. The classification of pronunciations of single vowels is introduced first. Those vowel letter combinations which are invariably pronounced as single vowels are classified together with
single vowel letters.

Table I: Classification of Single Vowel Letters and Vowel Letter Combinations Pronounced as Single Vowels
(British Pronunciation)

| | | strong sounds | | | | | weak sounds | |
|---|---|---|---|---|---|---|---|---|
| | | compound sounds | long vowels | | short vowels | | I | II |
| | | | I | II | I unround | II round | | |
| letters | a | [eɪ] | [ɑː] | [ɔː] | [æ] | [ɒ] | [ə] | [ɪ] |
| | e | | [iː] | | [e] | | [ə] | [ɪ] |
| | i | [aɪ] | [iː] | | [ɪ] | | [ə] | [ɪ] |
| | y | [aɪ] | [iː] | | [ɪ] | | [ə] | [ɪ] |
| | u | [juː] | [uː] | | [ʌ] | [ʊ] | [ə] | [jʊ] |
| | -w | [juː] | [uː] | | | | | |
| | o | [əʊ] | [uː] | [ɔː] | [ʌ] | [ɒ] | [ə] | |
| | oo | | [uː] | | [ʌ] | [ʊ] | | |
| | er* | | [ɜː] | | | | [ə] | |
| marks | stressed | ) | / | ǀ | \ | ⟨ | ˸ | ˚ |
| | un-stressed | ⌢ | – | ⌐ | ⌣̣ | ⌣ | . | c |

*Type "er" includes: er, ar, ir, or, ur, yr, our, uor, ure, -re

3. Following are some examples to illustrate how the pronunciation of English words is shown with the classifying marks listed in Table I

Table II :

| | | strong vowels | | | | weak vowels | |
|---|---|---|---|---|---|---|---|
| | | compound | long vowels I | long vowels II | short vowels I | short vowels II | I | II |
| a | stressed | dày [deɪ] | ásk [aːsk] | cáuse [kɔːz] | plàn [plæn] | wàsh [wɒʃ] | | |
| | un-stressed | sèparâte ['sepəreɪt] | bīpārtisàn [baɪpɑːtʒæn] | | còntràst ['kɒntræst] | whãtèver [wɒt'evə] | agò [ə'gəu] | pàlace['pælɪs] |
| e | stressed | | méat [miːt] | | yès [jes] | | | prètty ['prɪtɪ] |
| | un-stressed | | woùld-bē ['wudbiː] | | còntẽnt ['kɒntent] | | sìlent ['saɪlənt] | decìde [dɪ'saɪd] |
| i | stressed | like [laɪk] | líter ['liːtə] | | mìll [mɪl] | | òffice ['ɒfɪs] | mòrning ['mɔːnɪŋ] |
| | un-stressed | èxercîse ['eksəsaɪz] | áutomobĩle ['ɔːtəməbiːl] | | | | | |
| y | stressed | mỳ [maɪ] | quaý [kiː] | | sỳstem ['sɪstəm] | | | |
| | un-stressed | sàtisfŷ ['sætɪsfaɪ] | | | | | làbyrinth ['læbərɪnθ] | cìty ['sɪtɪ] |
| u | stressed | tùne [tjuːn] | blúe [bluː] | | mùst [mʌst] | pùt [put] | | |
| | un-stressed | àttitûde ['ætɪtjuːd] | | | bànkrūpt ['bæŋkrʌpt] | fũlfìl [ful'fɪl] | suppòrt ['səpɔːt] | òccupŷ ['ɒkjupaɪ] |
| -w | stressed | renèw[rɪ'njuː] | blèw [bluː] | | | | | |
| | un-stressed | sìneŵ ['sɪnjuː] | | | | | | |

| | | strong vowels | | | | | weak vowels | |
|---|---|---|---|---|---|---|---|---|
| | | compound | long vowels I | long vowels II | short vowels I | short vowels II | I | II |
| O | stressed | bóth [bəʊθ] | whó [hu:] | fórd [fɔ:d] | lòve [lʌv] | bòx [bɒks] | | |
| | un-stressed | phòtò [ˈfəʊtəʊ] | thróughòut [θru:ˈaʊt] | fòretèll [fɔ:ˈtel] | | fòxtròt [ˈfɒkstrɒt] | sècond [ˈsekənd] | |
| OO | stressed | | fóod [fu:d] | | floòd [flʌd] | goòd [gʊd] | | |
| | un-stressed | | mìddle schòol [ˈmɪdl sku:l] | | | nòte-boòk [ˈnəʊtbʊk] | | |
| type "er" | stressed | | verb [vɜ:b] | | | | | |
| | un-stressed | | àdverb [ˈædvɜ:b] | | | | pàper [ˈpeɪpə] | |

Examples of other letter combinations in Type "er":
Stressed strong vowels: bìrd[bɜ:d]   work[wɜ:k]   fur[fɜ:]   leàrn[lɜ:n]
Unstressed strong vowels: cìrcàdian[sə:ˈkeɪdɪən]   world war [ˌwɜ:ldˈwɔ:]
Unstressed weak vowels: circùmference[səˈkʌmfərəns]   èffort[ˈefət]
aturday[ˈsætədɪ]   còllar[ˈkɒlə]   mártyr[ˈma:tə]
còlour[ˈkʌlə]   lìquor[ˈlɪkə]   càpture[ˈkæptʃə]
thèatre [ˈθɪətə]

0099955

4. Notes to Tables I and II

(1) Some Concepts:

a/ Strong vowel: a vowel that exists either in a stressed syllable or in an unstressed one.

b/ Weak vowel: a vowel existing only in an unstressed syllable. However, some weak vowels may be in stressed syllables in the following condition: the vowels of the syllables of a word are all weak ones. For example, usually "e[I]" can only be found in an unstressed syllable, but in a special case, it may be a stress. For example, England ['ɪŋglənd]

c/ Stressed vowel: a vowel existing in the stressed syllable of a word. A secondary stress is deemed not to be a stressed vowel.

d/ Unstressed vowel: a vowel existing in an unstressed syllable of a word. A secondary stress is deemed to be an unstressed vowel.

Only in an actual word, can the distinction between a stressed vowel and an unstressed one be found existing. Apart from it, it would be impossible to differentiate one from the other, because neither of them is something substantial if separated from an actual word. But the distiction between a strong vowel and a weak one stands independent of an actual word.

In actual words, the above two pairs of concepts form four kinds of vowels:

a/ Stressed strong vowel: a strong vowel which exists in a stressed syllable.

b/ Unstressed strong vowel: a strong vowel which exists in an unstressed syllable.

c/ Unstressed weak vowel: a weak vowel which exists in an unstressed syllable.

d/ Stressed weak vowel: a weak vowel which, in some special cases, exists in the stressed syllable of a word ( the weak vowel [ə] can never be a stress).

(2) When preceded by a vowel letter, "w" is deemed to be a "non-independent vowel". And so is "-r [-ə]", if preceded by a vowel letter and pronounced [ə].

(3) "u", when pronounced [ju:], is made up of a semi-vowel and a vowel , and so classified into compound sounds. In American

pronunciation, "-r[-ər]" consists of a non-independent vowel and an ending consonant, and so placed into compound sounds, too. Compound vowels are included in compound sounds.

(4) Table I includes:

a/ the pronunciations of single-vowel letters pronounced as single vowels, compound vowels or other compound sounds.

b/ the pronunciations of vowel-letter combinations pronounced as single vowels.

But those vowel-letter combinations that are pronounced as compound vowels are not put into this group.

(5) Vowel section: The vowel letters between two consonants are named "vowel section". A vowel section may consist of only one vowel or several successive vowels. In some cases, a word is made up of one vowel section with no consonants at one or either end. For example: a, eye, at, do. A vowel section is usually given only one mark to be placed on one of its letters. For example, day[deɪ].

(6) "r" is silent, if a long vowel, a[ɑː], a[ɔː], o[ɔː] precedes and no vowel follows. For example, árm[ɑːm], wàr[wɔː], fòr[fɔː], fòur[fɔː]. In American pronunciation, these long vowels become short and "r" is voiced. For example, árm[ɑɾm], wàr[wɔr], fòr [fɔr], fòur[fɔr]. (See Table Ⅲ)

(7) The single letter "o" is pronounced [ɒ] when given a round short vowel mark "ŏ"; "ŏ" is pronounced [ɒ]. The same mark shows that the letter combination "o o" is pronounced [ʊ], "o ŏ" or "o ŏ" is pronounced [ʊ].

(8) Any vowel that is pronounced as an unstressed weak vowel is unmarked. But such a vowel letter has usually more than one pronunciation and therefore needs the following rules to differentiate them.

"a": generally pronounced [ə]. When followed by a consonant with a silent "e" after it, "a" is pronounced [I]. For example, vìllage[vɪlɪdʒ].

"e": mostly pronounced [ə]. In a prefix, it is pronounced [I]. For example, decíde[dɪ'saɪd]. In a suffix, it is pronounced [I] or [ə]. For example, dárkness['dɑːknɪs]; but when followed by "n", it is pronounced [ə] only. For example, devèlopment [dɪ'veləpmənt]

" i": generally pronounced [ɪ]. In a word of three or more syllables, the "i" of the middle syllable may either be [ɪ] or [ə]. For example, holiday[ˈhɒlɪdɪ].

"y" : generally pronounced [ɪ]. In a word of three or more syllables, the "y" of the middle syllable is pronounced [ə]. For example, labyrinth[ˈlæbərɪnθ].

"o" : "o" has only one pronunciation, that is [ə]. In some cases, "o" used to be pronounced [O], but now [O] has been replaced by [ə].

"u" : mostly pronounced [ə]. In a word of three or four syllables, the "u" of the middle syllable is pronounced [jʊ], for example, popular[ˈpɒpjʊlə]; the same "u" is pronounced [ʊ] , if preceded by "r" or "j", for example, instrument[ˈɪnstrumənt]; the same "u" is pronounced [ə] , if the middle syllable ends in the consonant "-l", "-m"  or "-n", with no vowel following immediately. For example, consultation[kɒnsəlˈteɪʃən] ,voluntary[ˈvɒləntərɪ].

(9) The weak vowel in a stressed syllable is marked, for example, pretty[ˈprɪtɪ], English[ˈɪŋglɪʃ].

5. A regularly silent vowel or consonant is unmarked, e.g. knife[naɪf],("k,e" are silent).

An irregularly silent vowel or consonant is marked with a dot under it, e.g. Wednesday[ˈwenzdɪ] , or represented  in fine strokes.

6. In some words, the vowel with an irregular pronunciation which cannot be found in the vowel classification table may be given the special mark Ö for a stressed vowel or Ö for an unstressed one. For example, any[ˈenɪ] . These words can also be represented entirely by fine strokes so as to indicate the impossibility of their transcription.

7. Following is the vowel classification table for American pronunciation.

Table Ⅲ

| letters | strong sounds | | | | | weak sounds | |
|---|---|---|---|---|---|---|---|
| | compound sounds | long vowels | short vowels | | | I | II |
| | | | III | I unround | II round | | |
| a | [eɪ] | [ɔ:] | [ɑ] | [æ] | [ɔ] | [ə] | [ɪ] |
| e | | [i:] | | [e] | | [ə] | [ɪ] |
| i | [aɪ] | [i:] | | [ɪ] | | [ə] | [ɪ] |
| y | [aɪ] | [i:] | | [ɪ] | | [ə] | [ɪ] |
| u | [ju:] | [u:] | | [ʌ] | [ʊ] | [ə] | [jə] |
| -w | [ju:] | [u:] | | | | | |
| o | [əʊ] | [u:] | [ɑ] | [ʌ] | [ɔ] | [ə] | |
| oo | | [u:] | | [ʌ] | [ʊ] | | |
| er* | [3r] | | | | | [ər] | |
| marks stressed | ◟ | / | ˈ | ˋ | ˎ | | |
| un-stressed | ⌢ | — | ⊓ | ⊃ | ◡ | . | ∘ |

* Type "er" includes: er. ar. ir. or. ur. yr. our. uor. ure

8. Some examples are given below to illustrate the pronunciations peculiar to American English:

(1) The "r" syllable which consists of one or more vowels and a "r" is pronounced as a long vowel and "r" is silent in British English, but in American the vowel becomes short and "r" is voiced. Examples:

(British) árt[ɑ:t]                          (American) árt[ɑrt]

fórd[fɔ:d]                          fórd[fɔrd]

verb[vɜ:b]                          verb[vɜrb]

(2) The difference in opening:

(British) wàsh[wɒʃ]                    (American) wàsh[wɔʃ]

wàsh[waʃ]

bólshy['bɒlʃɪ]                      bólshy['bɔlʃɪ]

bólshy['balʃɪ]

- 21 -

(3) The difference both in the opening and the length of the sound:

(British) ásk[ɑ:sk]        (American) àsk[æsk]

(4) Some weak vowels are unmarked according to the same rule, but pronounced differently.

(British) páper['peɪpə]      (American) pàper['peɪpər]

      singular['sɪŋgjʊlə]      singular['sɪŋgjələ]

(5) Some words have the same pronunciation, but different marks,

(British) cáuse[kɔ:z]      (American) cáuse[kɔ:z]

9. The letter combinations pronounced as unstressed single weak vowels:

Type "er" in Table I is a letter combination pronounced as an unstressed weak vowel. Besides Type "er", there are some other letter combinations pronounced as unstressed weak vowels, which may be divided into two groups: single vowels and compound vowels. Following is the table of the letter combinations pronounced as unstressed single weak vowels.

Table Ⅳ

| Letter Combination | Pronunciation | | Example |
|---|---|---|---|
| ay | [ɪ] | | Sùnday ['sʌndɪ] |
| ey | | | vàlley ['vælɪ] |
| ai | [ɪ] | [ə] | móuntain ['maʊntị̈n] |
| ei | | | sòvereign ['sɒvrị̈n] |
| ui | | | bìscuit ['bɪskị̈t] |
| ou | | [ə] | húmorous ['hju:mərəs] |
| oa | | | wáistcoat ['weskət] |
| ua | | | únusual [ʌn'ju:ʒə̣l] |

Notes to Table

The unstressed weak vowels in the table may be pronounced in two ways, either [ɪ] or [ə]. The two different pronunciations have to be distinguished from each other by the use of a certain type of letter combinations, because the unstressed weak vowels are generally unmarked.

(1) The letter combination ended by "y" is prnounced [ɪ]. Since its second letter is "y", the first one cannot be "y" or "i"; neither "o", for "oy" can only be pronounced as the diphthong [ɔɪ], and must be marked (see Table V). The usual English vowel arrangement conditions there are only two combinations for this type: "ay" and "ey".

(2) The letter combinations ended by "i" is pronounced [ɪ] or [ə]. Since its second letter is "i", for the same reason as above, this type has only the following combinations: "ai", "ei", "ui".

(3) The letter combinations without a terminal "i" or "y" is pronounced [ə].

10. Successive Vowels:

An English compound vowel is composed of either two or three sounds, ended by any of the following weak vowels: [-ə], [-ɪ], [-ʊ]. The initial sound is pronounced with stress. Sometimes several vowels go together, one after another, but they are not of the same arrangement as usual English compound vowels. For example, "piano[pɪ'ænəʊ]" "-ia-[ɪæ]" in this word is made up of two successive vowels; "initiation[ɪˌnɪʃɪ'eɪʃən]", "-ia- [ɪ·eɪ]" is composed of a single vowel plus a diphthong, i.e. three successive vowels; "biotechnology[ˌbaɪəʊtek'nɒlədʒɪ], "-io-[aɪəʊ]" is composed of two diphthongs, i.e. four successive vowels. We name these phenomena respectively "unit of two successive vowels", "unit of three successive vowels" and "unit of four successive vowels". As regards letter combinations, those pronounced as compound vowels are classified into different units of successive vowels in accordance with the number of their vowels. The diphthongs, [eə], [ɪə], [ʊə], [aɪ], [eɪ], [ɔɪ], [aʊ], [əʊ], are deemed as units of two successive vowels; the compound vowels of three sounds, [aʊə], [aɪə], [eɪə], [ɔɪə], [əʊə], are taken as units of three successive vowels. Besides, the vowels made up of the semi-vowel [j]+vowel, [juː], [jʊ], are deemed to be units of two successive vowels, too.

A unit of successive vowels may be a compound vowel or a group of several successive vowels. In written form, it is made up of two or more letters; in pronunciation, it comprises two or more vowels. Compound vowels are also deemed to be units of successive vowels, except those that are represented by single vowel letters. "a[eɪ]", "i[aɪ]", "y[aɪ]", "o[əʊ]", "u[juː]", "u[jʊ]"

classified as compound sounds in Table I, are not units of successive vowels. There are three kinds of units of successive vowels: a unit of two successive vowels, a unit of three successive vowels, a unit of four successive vowels. The mark for a unit of two successive vowels:

     stressed: Ó                 unstressed: Ô

The mark for a unit of three successive vowels:

     stressed: Ó                 unstressed: Õ

A unit of four successive vowels may be shown either with two marks for a unit of two successive vowels or with a mark for a single vowel and that for a unit of three successive vowels.

11. Units of Two Successive Vowels

Table Ⅴ

(1) Units with a Weak Vowel in the Back Part

| | | Stressed Strong Vowel | Unstressed Strong Vowel |
|---|---|---|---|
| [ɪə] | | | |
| | éer | caréer [kə'rɪə] | |
| | éar | appéar [ə'pɪə] | nêar-sighted [nɪə'saɪtɪd] |
| | iér | fiérce [fɪəs] | |
| | éir | wéird [wɪəd] | |
| | ére | sevére [sɪ'vɪə] | hèmisphêre ['hemɪsfɪə] |
| | ér | hérŏ ['hɪərəʊ] | pêriódic [ˌpɪərɪ'ɒdɪk] (2) |
| [eə] | | | |
| | eár | weár [weə] | |
| | áir | repáir [rɪ'peə] | |
| | áer | áerial ['eərɪəl] | |
| | áre | cárefully ['keəfʊlɪ] | fârewèll [feə'wel] |
| | ár | scárcely ['skeəslɪ] | |
| | ár | váriegâted ['veərɪəgeɪtɪd] | |
| | áyer | prayer | |
| | áyor | mayor | |
| | ére | ére [eə] | thêrebý [ðeə'baɪ] (1) |
| | éir | théir [ðeə] | |
| [ʊə] | | | |
| | óor | póor [pʊə] | |

oùr toùr[tʊə]

ùre sùrely[ˈʃʊəlɪ]  préfèctûre[ˈpriːfektʃʊə]

ùr insùrance[ɪnˈʃʊərəns]

ùa      Fèbrûary[ˈfebruərɪ]

ùe crùel[kruəl]  ìnflûence[ˈɪnfluəns]

ùou      exìgûous[ɪgˈzɪguəs]

[ɔə]

ôre môre[mɔə]

ôur pôur[pɔə]

[ɔɪ]

ôi pôint[pɔɪnt]  sàlmonôid[ˈsæmənɔɪd]

ôy tôy[tɔɪ]  newsbôy[ˈnjuːsbɔɪ]

[eɪ]

êi nèighbour[ˈneɪbə]

êy prêy[preɪ]

[uːɪ]

ûi· rùin[ruːɪn]

[ɪɪ]

îe      fìftîeth[ˈfɪftɪɪθ]

[aʊ]

ôw dôwn[daʊn]  sòmehôw[ˈsʌmhaʊ]

ôu clôud[klaʊd]  fôundàtion[faʊnˈdeɪʃən]

[əʊ]

âu châuffeur[ˈʃəufə]  mà.nteâu[ˈmæntəʊ]

êw sêw[səʊ]

(2)Units with a Strong Vowel in the Back Part

[ɪæ]

iâ piànô[pɪˈænəʊ]  màniâc[ˈmeɪnɪæk]

eâ reâct[rɪˈækt]

[ɪɒ]

iô pêriôdical[pɪərɪˈɒdɪkəl]

eô theôlogy[θɪˈɒlədʒɪ]

[ɪɑ]

iê ôriêntal[ˌɔːrɪˈentl]  piêtá[pɪeˈtɑː]

[uːɪ]

uî fruìtion[fruːˈɪʃən]

0099955

- 25 -

[ʊe]

    uĕ    statuètte[ˌstætʃʊˈet]

[ʊæ]

    uă    pūnctuálity[pʌŋktʃʊˈæliti]

Notes

(1) In some words, "ere" and "eir" are pronounced [ɪə] and in others [eə]. "ere" or "eir" with the mark ◌̣̀, i.e. "ère" or "èir", is pronounced [ɪə]. "ère" and "èir" are pronounced [eə].
◌̣̀ is originally the mark for a single vowel letter pronounced as a compound vowel. Since the single letter "e" is in no case pronounced as a compound vowel, the mark ◌̀ can be used to be placed on the "e" in the unit "ère" or "èir" to show the compound vowel [eə]. So it is prescribed in the table that "ère" or "èir" is pronounced [eə].
(2) The "r" between two vowels is sometimes pronounced [-ər-]. For example, hèrō[ˈhɪərəʊ]. And sometimes [r-]. For example, herald[ˈherəld]. This distinction is shown by the mark on the vowel before "r". In "hèrō", ◌̀ is the mark for a unit of two successive vowels, indicating what lies under it is a letter combination pronounced as a unit of successive vowels. Therefore, on one hand, "r", together with "e", forms the unit of successive vowels "er[ɪə]", in which "r" is pronounced [ə]; on the other, as a consonant, it is linked in pronunciation to the next vowel "o". In "hèrald", ◌̀ is the mark for a single vowel, indicating that the "e" under it is pronounced as a single vowel, and "r" acts only as a consonant, linked in pronunciation to the next vowel.

12. There are two kinds of units of two successive vowels: compound vowel letter combinations and non-compound vowel letter combinations. The former is marked on the front part; the latter on the back. But a small number of non-compound vowel letter combinations are marked on the front part, too, if the front vowel is a stressed syllable, e.g. "rúin[ˈruːin]". In order to make it easier to ascertain their pronunciations, the types of letter combinations in Table V pronounced as units of two successive vowels are put into the following groups:

(1) With the mark on the front part:

a/ "...ê..." The front part is "e" or a letter combination with "e" in it, the back part is:

    (i) "r" or a letter combination with "r" in it, the whole unit is pronounced [ɪə];

    (ii) "i" or "-y", the whole unit is pronounced [eɪ];

    (iii) "-w", the whole unit is pronounced [əʊ].

b/ "ê..." pronounced [eə].

c/ "...â..." The front part is "a" or a letter combination with "a" in it, the back part is:

    (i) "r" or a letter combination with "r" in it, the whole unit is pronounced [eə];

    (ii) "u", the whole unit is pronounced [əʊ].

d/ "o..." The back part is:

    (i) "r" or a letter combination with "r" in it, the whole unit is pronounced [ɔə];

    (ii) "i" or "y", the whole unit is pronounced [ɔɪ];

    (iii) "u" or "w", the whole unit is pronounced [aʊ].

e/ "ôo...." The front part is "oo", the back part is "r"; the whole unit is pronounced [ʊə].

f/ "...û..." The front part is "u" or a letter combination with "u" in it, the back part is:

    (i) "r" or a letter combination with "r" in it, or "a", "e", the whole unit is pronounced [ʊə];

    (ii) "i", the whole unit is pronounced [u:ɪ] or [u:ə].

g/ "î..." The front part is "i", the back part is "e", the whole unit is pronounced [ɪɪ].

(2) With the mark on the back part:

a/ "...å" The back part is "a", the front part is:

    (i) "i" or "e", the whole unit is pronounced [ɪæ];

    (ii) "u", the whole unit is pronounced [ʊæ].

b/ "...ô" The back part is "o", the front part is "i" or "e", the whole unit is pronounced [ɪɒ].

c/ "...ê" The back part is "e", the front part is:

    (i) "i", the whole unit is pronounced [ɪe];

    (ii) "u", the whole unit is pronounced [ʊe].

d/ "...i" The back part is "i", the front part is "u", the whole unit is pronounced [u:ɪ].

- 27 -

13. All types of the aboved-mentioned units of two successive vowels are strong vowels. [iə], the pronunciation of the letter combination "e... ..." is one of them. There are some otherletter combinations which are pronounced [iə], too; but this [iə] is a weak vowel and pronounced [ə] when linked to the consonant [ʃ], [ʒ], [tʃ],or [dʒ] before it. Following is the table of the units of two successive vowels pronounced as weak vowels:

Table VI

| Letter Combination | Unstressed Weak Vowel [iə] | Weak Vowel [ə] | Stressed Weak Vowel ['iə] |
|---|---|---|---|
| ea | méditerránean [medɪtə'reɪnɪən] | vèngeance ['vendʒəns] | théater ['θɪətə] |
| eo | theorètical [θɪə'retɪkəl] | súrgeon ['sɜːdʒən] | théorem ['θɪərəm] |
| eu | petróleum [pɪ'trəʊlɪəm] | | mûséum [mjuː'zɪəm] |
| eou | coúrteous ['kɜːtɪəs] | ríghteous ['raɪtʃəs] | |
| ia | brìlliant ['brɪlɪənt] | ārtifìcial [ɑːtɪ'fɪʃəl] | pìanist ['pɪənɪst] |
| ie | àudience ['ɔːdɪəns] | àncient ['eɪnʃənt] | |
| io | ùnion ['juːnɪən] | fàshion ['fæʃən] | |
| iu | ràdius ['reɪdɪəs] | | |
| iuo | victórious [vɪk'tɔːrɪəs] | ànxious ['æŋkʃəs] | |
| iar | famìliar [fə'mɪlɪə] | | |
| ier | càrrier ['kærɪə] | sóldier ['səʊldʒə] | |

- 28 -

ior        warrior
              ['wɒrɪə]

iour        saviour
              ['seɪvɪə]

14. In order to make it easier to distinguish pronunciations by written forms, the types listed in the above table of letter combinations pronounced as unstressed weak vowels are put into groups as follows:

(1) "e...": "e" is followed by "a", "o", "u", or "ou";

(2) "i...":"i" is followed by any vowel but "i" and "y". These two groups of unstressed weak vowels are pronounced [ɪə]; when preceded by such consonants as g[dʒ], t[t∫], c or s[∫], x[k∫], they are pronounced [ə].

(3) "i...r" A unit of this type is headed by "i", ended by "r" with any vowel but "i" or "y" in between, pronounced [ɪə]. Only in the following condition, can a weak vowel(except [ə]) be a stress: the vowels in all the syllables of a word are weak ones. The weak compound vowel [ɪə] may also be a stress, e.g. theatre['θɪətə] . But there are exceptions to this rules. For example, European[,juərə'pɪən].Whether an exception or not, so long as [ɪə] is a stress, the mark ŏ is placed on "e" or "i".

15. Units of three successive vowels:

Table VII

(1) Units with a Weak Vowel in the Back Part

| | | Stressed Strong Vowel | Unstressed Strong Vowel |
|---|---|---|---|
| [aɪə] | | | |
| | ire | aquire[ə'kwaɪə] | empire['empaɪə] |
| | yr | tyrant['taɪərənt] | |
| | id | maniacal[mə'naɪəkəl] | |
| | ie | fiery['faɪərɪ] | scientific[saɪən'tɪfɪk] |

- 29 -

ĭo    bĭosphēre[ˈbaɪəsfɪə]      bĭològical[ˌbaɪəˈlɒdʒɪkəl]

ĭu    trĭumph[ˈtraɪəmf]

[eɪə]

ăyer    lăyer[ˈleɪə]

ăyo    crăyon[ˈkreɪən]

ăe               Ìsrāel[ˈɪzreɪəl]

[eɪɪ]

ăi    prôsăic[prəʊˈseɪɪk]

[ɔɪə]

ŏyer    destrŏyer[dɪsˈtrɔɪə]

ŏya    lŏyal[ˈlɔɪəl]

[aʊə]

ŏur    devŏur[dɪˈvaʊə]      ōursèlves[aʊəˈselvz]

ŏwar    cŏward[ˈkaʊəd]

ŏwer    pŏwer[ˈpaʊə]

ŏwa    nŏwadâys[ˈnaʊədeɪz]

ŏwe    tŏwel[ˈtaʊəl]

[əʊə]

ower    lŏwer[ˈləʊə]      wìdoŵer[ˈwɪdəʊə]

ŏo              zoològical[ˌzəʊəˈlɒdʒɪkəl]

[əʊɪ]

ŏi    herŏic[hɪˈrəʊɪk]      hèrŏine[ˈherəʊɪŋ]

[jʊə]

ŭre    secŭre[sɪˈkjʊə]

ŭr    cŭrious[ˈkjʊərɪəs]      cŭriòsity[ˌkjʊərɪˈɒsɪtɪ]

eŭr    Eŭrope[ˈjʊərəp]      Eŭropéan[ˌjʊərəˈpɪən]

youŕ    youŕ[jʊə]

ŭa    sŭable[ˈjˑʊəbl]      grădŭal[ˈgrædjʊəl]

ŭe    fŭel[fjˑʊəl]

ŭu            vàcŭum[ˈvækjʊəm]

0099955

— 30 —

ŭou            vàcŭous[ˈvækjuəs]

eŵar    steward[stjᵘ̆əd]      stewardess[stjᵘ̆əˈdes]

ui      suicide[ˈsjuːɪsaɪd]     gènŭine[ˈdʒenjuən]

(2) Units with a Strong Vowel in the Back Part

| | | | Stressed Strong Vowel | Unstressed Strong Vowel |
|---|---|---|---|---|
| iă | [aɪ æ ] | diămeter[daɪˈæmɪtə] | | |
| iá | [ ɪ eɪ] | initiátion[ɪnɪʃɪˈeɪʃən] | initiăte[ɪˈnɪʃɪeɪt] | |
| iŏ | [aɪ ɒ ] | biŏlogy[baɪˈɒlədʒɪ] | | |
| ió | [ ɪ əʊ] | cŏnversăzióne[kɒnvəsætsɪˈəʊnɪ] | ràdiŏ[ˈreɪdɪəʊ] | |
| iŭ | [aɪ ʌ ] | triŭmphant[traɪˈʌmfənt] | | |
| iĕ | [aɪ e ] | quiĕscent[kwaɪˈesənt] | | |
| uĕ | [jʊ e ] | stătuĕt[stætjʊˈet] | | |
| uă | [jʊ æ ] | pŭnctuălity[pʌŋktjʊˈælɪtɪ] | | |
| uá | [ ʊ eɪ] | situátion[sɪtʃʊˈeɪʃən] | pùnctuăte[ˈpʌŋktʃueɪt] | |
| oyeé | [ɔɪ iː ] | employeé[emplɔɪˈiː] | | |

16. There are two kinds of units of three successive vowels:
(1) a unit with a weak vowel in the back part( simplified as
a "weak-back" unit): The back part is a weak vowel[ə] or [ɪ];
the front part is a compound vowel of two sounds, [aɪ], [eɪ],
[aʊ],[əʊ],[ɔɪ],[jʊ],[juː].
(2) a unit with a strong vowel in the back part (simplified
as a "strong-back" unit): The back part is a strong vowel.
This vowel may be such compound vowels as [eɪ], [əʊ],etc, or
a strong single vowel, [æ], [ɒ], [ʌ], [e], [iː], etc. If there
is a compound vowel in the back part, the vowel in the front part must be a single one. If a single vowel exists in the back part, the front part is invariably occupied by a compound vowel and the single vowel must be a stress.

The mark positions : for a weak-back unit of three successive vowels, the mark ɒ́ is placed on the front part; for a strong-back unit of three successive vowels, the mark is placed on the back part.

17. The letter combination types of the weak-back units of three successive vowels are put into groups as follows:

(1) "í...", "ý..."

The front part is "i" or "y"; the back part may be "r" or a letter combination with "r" in it, or may be "a, e, o, u", but never "i, y". The whole unit is pronounced [aɪə].

(2) "á..." (including "ay"); the back part may be "-r" or a letter combination with "r" in it, or may be "e, o", but never "a, i, y, u". The whole unit is pronounced [eɪə].

(") "ái"

The front part is "a"; the back part can only be "i". The whole unit is pronounced [eɪ].

(4) "óu...", "ów..."

The front part is "ou" or "ow"; the back part may be "-r" or a letter combination with "r" in it, or may be "a, e ", but never "o, u, i". The whole unit is pronounced [aʊə].

(5) "ow̌..."

The front part is "ow"; the back part is a letter combination with "r" in it. Since this group is the same with group (4) in form, the distinction between the two has to be shown by the position of mark. That's why ɒ́ is placed on "w" instead of "o".

(6) "óo"

The front part is "o" and the back part is "o", too. Since it is a weak-back unit, the back "o" being pronounced [ə], the front "o" is of course pronounced as the compound vowel [əʊ]. The whole unit is pronounced [əʊə].

(7) "oi"

The front part is "o"; the back part can only be "i". The whole unit is pronounced [əʊ].

(8) "óy..."

The front part is "oy"; the back part may be "r" or a letter combination with "r" in it or "a", but never "i, y, u". The whole unit is pronounced [ɔɪə].

(9) "...ú...", "eẃ..."

The front part is "u", "you" or "ew"; the back part is sometimes "r " or a letter combination with "r" in it, sometimes "a, e, u, ou". The whole unit is pronounced [jʊə]. In a stressed syllable, it may be pronounced [ju:ə] in some cases.

If a unit of this group is ended by "i", its pronunciation is [jʊɪ]; but in a stressed syllable, sometimes it is pronounced [ju:ɪ], and may also be [jʊə] or [ju:ə].

18. The letter-combination types of strong-back units of three successive vowels are put into two groups:

The first group: the back part is a compound vowel of two sounds and the front part a single vowel.

The second group: the back part is a single vowel; the front part a compound vowel of two sounds.

It's difficult to distinguish one group from the other by judging from the letters. The mark position is therefore used to make the difference. If the back part of a strong-back unit is a single vowel, the mark is placed right on it; if it is a compound vowel, the mark is placed a little after it.

For example, initiátion[ɪnɪʃɪ'eɪʃən].

In letter combinations of strong-back units, except "e", all the vowel letters may be pronounced in two ways:

a: [eɪ], [æ]
i: [aɪ], [ɪ]
e: [e]
o: [əʊ], [ɒ]
u: [jʊ] (sometimes [ju:] ), [ʊ] or [ʌ]

Take "ia". If this combination is marked as "iá", it shows that "a" is pronounced [æ]; so "i" must be [aɪ] and "ia" is pronounced [aɪæ]. If "ia" is marked as "ia'", it shows that "a" is pronounced [eɪ]; so "i" must be [ɪ] and "ia' " is pronounced [ɪeɪ]. Take "io" for another example. If it is marked as "io' ", it is pronounced [ɪəʊ].

As the pronunciation of the letter "u", the compound vowel [jʊ] may sometimes be replaced by [ju:]. When "u" is pronounced as

- 73 -

a single vowel, there may be two pronunciations for it: as the front part, it is pronounced [ʊ]; as the back part, [ʌ]. When "u" is the front part, "uä" shows "a" is pronounced [æ], "u" [jʊ], and "ua" [jʊæ]. "uä" shows "a" is pronounced [eɪ], "u" [ʊ] and "uä" [ʊeɪ]. When "u" is the back part, "iŭ" shows "u" is pronounced [ʌ], so "i" must be [aɪ] and "iŭ" is pronounced [aɪʌ]. As the back part, "e" is pronounced [e], But "ee", as the back part, is pronounced [i:], so the front part "oy" must be [ɔɪ] and "oyee" is pronounced [ɔˈi:] .

Those vowel sections of three sounds that go beyond the above classified types cannot be shown with the mark for units of three successive vowels. For example, koala [kəʊˈɑːlə]. [əʊˈɑː] looks like a strong-back unit, but in fact it is not. For as a single vowel, the "a" in a strong-back unit of three successive vowels can only be pronounced [æ] instead of [ɑː] . Therefore, this word cannot be marked with "ŏ". It should be marked like this: kôála [kəʊˈɑːlə].

19. Units of four successive vowels:
There are only a small number of units of four successive vowels and so no special mark has been designed for them. They are shown with the marks for single vowels and for units of two and three successive vowels. For a unit of four successive vowels is nothing more than two units of two successive vowels or a unit of three successive vowels plus a single vowel. For example, bîôtechnòlogy [ˌbaɪəʊtekˈnɒlədʒɪ], sitûátion [sɪtjʊˈeɪʃən]. "situation" may also be pronounced [sɪtjʊˈeɪʃən]. [ʊeɪ], a unit of three successive vowels, may be marked with "ŏ". So this word may be marked like this: situŏtion.

20. For students of English with some command of English reading rules, it is unnecessary to mark regularly-pronounced words. For example:

| Letter | Open Syllable Pronunciation | Example | Closed Syllable Pronunciation | Example |
| --- | --- | --- | --- | --- |
| a | [eɪ] | late | [æ] | glad |
|   |   |   | w-[ɒ] | wand |
| e | [i:] | he | [e] | ten |
| i | [aɪ] | like | [ɪ] | sit |

- 34 -

| y | [aɪ] | by | | |
| o | [əʊ] | no | [ɒ] | not |
| u | [ju:] | tune | [ʌ] | sun |
| | j-,l-,r-[u:] | June | | |
| | | blue | | |
| | | true | | |

Irregular words have to be marked. For example, hàve[hæv], gìve[gɪv], trúth[tru:θ].

21. The total number of marks provided in Draft II amounts to nine pairs, which fall into a respective group for the stressed syllables and the unstressed ones. To economize on the marks, the author suggests to choose half, i.e. nine of the total, for use. The chosen marks are listed below:
compound sound: Ô ; long vowel I: Ó ; long vowel II: Ō ;
short vowel I: Ò ; short vowel II: Ò̌ ; weak vowel I: Ȯ ;
weak vowel II: Ọ̇ ; unit of two successive vowels: Ô ; unit of three successive vowels: Õ .
Word stress is shown with a dot placed on the mark, e.g. Ô̇, Ó̇.
The usage of this stress mark, i.e. the dot, is the same as the usage of the stress mark provided in Draft I ( See pages 11-13, Section II , Draft I). If the position of word stress keeps in agreement with the rules expounded in Section II , Draft I, the dot showing stress may be omitted.

The two drafts are based on the same thesis about English reading rules that the pronuncition of vowel and consonant letters is closely connected with the stress position, and the change in the pronunciation of consonant letters coincides with that in the pronunciation of vowel letters. The application of the thesis to practice has resulted in the two drafts. The first one is from sounds to stress, and the second from stress to sounds. The former is suitable for children and the latter is more extensively applicable.

## CHINESE PRONUNCIATION-SHOWING TYPE FACES

1. Every character retains its original strokes and structure. Out of each character, three strokes are chosen to represent its initial consonant, "yunmu" and tone.

The pronunciation of a Chinese character, a Chinese syllable, may be divided into two parts: "shengmu" and "yunmu". The former is an initial consonant; the latter a single or compound vowel, sometimes a single or compound vowel plus the terminal consonant [n] or [ŋ]. Not every Chinese syllable has an initial consonant. A syllable without the initial consonant is called a non-initial-consonant syllable. Every Chinese syllable varies in pitches. The changes in pitch are known as its tones.

2. Whenever possible, the initial consonant is represented by a vertical stroke and the "yunmu" by a horizontal one. When there is no obvious vertical or horizontal stroke to be chosen, a slanting or point stroke may be the substitute. A horizontal stroke can not represent the initial consonant, neither can a vertical one the "yunmu". But both the slanting and the point strokes can represent either the initial consonant or the "yunmu". If one of the two strokes representative of the initial consonant and the "yunmu" is vertical or horizontal one and the other a slanting or point one, what the latter represents has to be decided by what the former does: if the former is used to show the initial consonant, the latter the "yunmu"; or vice versa.

If the two strokes are both slanting or point strokes, it is the order of strokes observed in calligraphy that decides which represents which.

The tone is represented by a stroke at the lower part on the right.

The strokes that represent the initial consonant, the "yunmu" and the tone are named stroke letters.

3. The designs for stroke letters (1) Initial consonants

| Chinese Phonetic Alphabet | Stroke Letter | Reason for Design |
|---|---|---|
| b | { | |
| p | { | |
| m | ↑ | similar to the first half of "M" |
| f | { | "f" with the horizontal stroke missing |
| d | ⌡ | |
| t | ⌐ | similar to "ﬀ" |
| n | ↑ | similar to the first half of "n" |
| l | ⌐ | similar to "L" |
| g | ⌐ | similar to "G" |
| k | ↓ | "<" is taken off "k" and put under the vertical stroke |
| h | ↓ | a little different from "h" |
| j | ⌡ | "j" with the dot missing |
| q | ↑ | |
| x | ↑ | the first half of "x" with a downward vertical stroke. |
| z | ⌐ | "z" is first changed into "⌐" and then its upper half is taken. |
| c | ⌡ | "c" with an upward vertical stroke. |
| s | ⌠ | "s" is first changed into "⌠" and then its upper half is taken. |
| zh | ↓ | The vertical stroke is thickened, because the initial consonant of "直" is "zh". |
| ch | ⌡ | similar to "⌡" |
| sh | ⌡ | the other half of "⌠" (the changed "s") |
| r | ↓ | similar to "⊦" |

Note: When used in a short stroke, "x" { may be written as " ﹀ "
, and "c" { as " ⸦ ". " ﹀ " and " ⸦ " are         the short form
of "x" and "c".

(2) "Yunmu"

a/ Single Vowels

| Chinese Phonetic Alphabet | Stroke Letter | Reason for Design |
|---|---|---|
| a | ▬ | |
| e,o | ▬ | |
| i | ▬ | In Chinese, the character " ▬ " is pronounced " i ". |
| u | ▬ | " ▬ " is similar to the straightened form of the letter "U". |
| ü | ▬ | |
| er | ▬ | The Arabic numeral "2" is pronounced "èr" in Chinese and " ▬ " is the straightened form of "2". |

Note: Besides, there's a short form for some stroke letters. When used in short strokes, "u ▬" and "i ▬ " may be written like this , "u" ⟶ " ◡ " and "i" ⟶ " ⌒ ".

b/ Compound Vowels and Compound Vowels with a Terminal Consonant ("Yunmu")

To make them easier to memorise, these "yunmu" are arranged into several groups of four:

Group 1

| "Yunmu" | Reason for Design |
|---|---|
| ei ▬ ie ▬ | The half ring upon the horizontal line represents "e", because "e" can be extended into " ▬ ". The half ring under the horizontal line represents "a", because " ▬ " is extended from "a". The horizontal line represents "i". |
| ai ▬ ia ▬ | |

Grpop 2

- 38 -

"Yunmu"                    Reason for Design

u(e)i    i(o)u          The horizontal line represents"i", the arc
                        itself represents "u" and its different posi-
uai      iau            tions show some other vowels.Its position on
                        the line indicates "e,o" (the two vowels are
                        of the same phoneme in Chinese);when it is
                        under the line , "a" is indicated.

Group 3

uo       ou             The horizontal line performs no more function
                        than that of an axis, showing not a single
ua       au             sound. The arc itself represents "u" and its
                        different positions indicate some other
                        vowels.When it is on the line, "o" is indi-
                        cated; its position under the line shows "a".
                        Its presence at the head of the line indicates
                        "u" is the former sound while its .position at
                        the end of the line shows "u" is the latter
                        sound.

Group 4

en       i(e)n          The black triangle itself represents "n";its
                        presence on the line  shows  "e"; its posi-
an       ian            tion under the line shows " a " . The line
                        with the angle at the end represents "i";
                        the line with the angle at the head shows no
                        sounds, acting only as the axis of position.

Group 5

eng      i(e)ng         The obtuse angle itself represents "ng"; its
                        position on the line indicates "e"; and that
ang      iang           under the line indicades "a". The line with
                        the angle at the end shows "i"; the line with
                        the angle at the head shows no sounds.

0099955

Group 6

| u(e)n | u(e)ng |
|---|---|
| ● ▬ | (ong) ▬● |
| uan | uang |
| ●▬ | ▬ |

The black semi-circle itself represents "u", its presence upon the line indicates "e", its position under the line shows "a". When it is at the end of the line, it indicates the front nasal sound "n"; its position at the end indicates the back nasal sound "ng". The line itself represents no sounds.

Group 7

| ü(e)n | üeng |
|---|---|
| ╶▬ | (iong) ▬╴ |
| üan | |
| ╶▬ | |

The fold itself represents "u", its position on the line indicates "e", and that under the line indicates "a", its presence at the head of the line indicates the front nasal sound "n" and its being at the end indicates the back nasal sound "ng". The line itself does not represent any sound.

Group 8

üe ▬╴

(3) Tone

Chinese characters have the following tones: Tone 1: high level; Tone 2: rising; Tone 3: falling-rising; Tone 4: falling. And there's a light tone in addition.

Tone 1 is unmarked.

Tone 4 is shown by thickening the end of the stroke at the lower part on the right. For example, 大益叫闲

Tone 3 is shown as follows: If there's an angle stroke or an angle composed of two strokes at the lower part on the right, the angle is thickened; if there's no such an angle stroke or an angle composed of two strokes, both ends of the stroke at

0099955

the same place as above are thickened, e.g. 氵 雪 少

Tone 2 is shown by thickening the beginning or the middle of the stroke at the lower part on the right. For example,

王 浮 反 八

The light tone is shown by adding a half dot at the end of the stroke at the lower part on the right. For example,

腻 ·de 靴

If at the lower part on the right there stands a little point stroke, the tone may be shown as follows: Tone 4: 意

Tone 3: 咦    Tone 2: 黄    Light Tone: 思.

The grammatically regular light tone is unmarked. For example, the suffix of a noun: 子 , 儿 , 头 , 巴 ; auxiliary words: 了 ·le, 着 ·zhe, 过 , 的 ·de, 地 ·de, 得 ·de, 吗 , 呢 , 吧 , 啊 etc; words of locality: 上 , 下 , 里 etc.

4. How the stroke letters are set in a Chinese character.

(1) The most suitable line to set in the stroke letter representative of the initial consonant is the vertical stroke on the left and that to set in the stroke letter representative of the "yunmu" is the horizontal stroke at the top. For example, 国 guó. An obvious vertical stroke on the top may also have the initial consonant set in. For example, 壶 hú. The slanting or point stroke at the above-mentioned two positions may be the substitute for the vertical or horizontal one, if the former is more obvious than the latter. For example, 希 xī, 没 méi.

(2) In a non-initial-consonant syllable, only the "yunmu" and the tone are shown; the initial consonant is unmarked, because it does not exist. For example,

我 e    翌 i    戊 u    窝 u    鹅 ér

亚 ià    呀 üě    雁 iàn    枕 iou    幹 uò

(3) In the following syllables, the "yunmu" may be unmarked, but the initial consonant and the tone have to be shown, they

- 41 -

are: bo po mo fo de te ne le ge ke he ji qi xi
zi ci si zhi chi shi ri. For example,

辟 bò 回 pò 忒 tè 硌 gè 翮 hè

秋 shǐ 沏 qì 漬 zì 茈 zhǐ 蒂 chì

(4) As a lot of Chinese characters have a basic structural
part on the left or at the top, it's very easy to set the initial consonant and the "yunmu" in these parts.
Some basic structural parts have to be modified to adjust to
the two stroke  letters representative of the initial conso-
nant and the "yunmu":

小 is modified to 十 . e.g. 拨 qüān

火 is modified to 大 . e.g. 烖 xüàn

扌 is modified to 扌 (The angle at the lower end is taken
away) e.g. 拼 pàn

辶 is modified to 辶 The third stroke is marked to show
the tone. e.g. 逋 bū

Other basic structural parts have stroke letters set in  them-
selves as follows:
亻 The vertical stroke represents the initial consonant, the
slanting stroke represents the "yunmu", e.g. 仂 lè

宀 The top point stroke represents the "yunmu" and the vertical stroke on the left represents the initial consonant.
e.g. 宕 dàng

门 The vertical stroke on the left represents the initial
consonant, the top point stroke represents the "yunmu", the
fold stroke represents the tone, e.g. 阄 jiōu

纟 the top slanting stroke represents the initial consonant,
the lowest stroke represents the "yunmu", e.g. 纠 jiōu

- 42 -

Claims

1. Some written languages fail to show pronunciation or fail to show pronunciation with accuracy. One of the usual solutions of this problem is to design a new writing system to replace the old one, and both the original letters and spellings have to be transformed, which can hardly be widely accepted.Our present invention is not writing systems but type faces which can show pronunciation with great accuracy and, what is more significant, require no painstaking efforts on the part of millions of people accustomed to the existing writing system to get used to the new type faces, because the original letter forms and spellings (in the case of English), and the original character structures (in the case of Chinese) are kept unchanged. The invention consists of a set of English pronunciation-showing type faces and a set of Chinese pronunciation-showing type faces, characterized in that English letters (in Draft I of the English pronunciation-showing type faces) or Chinese characters are made to show pronunciation with great accuracy by marking heavier different parts of a letter (in the case of English) or by marking heavier the inserted stroke letters(in the case of Chinese) which form the three strokes representative of the initial consonant, the "yunmu" and the tone of a Chinese character.

2. Various sets of additional marks have been designed to render such phonetic writing system as English capable of showing pronunciation with great accuracy, but all of these sets of marks, which seem similar to our second draft of Englihs pronunciation-showing type faces(simplified as Draft II ), have the defect of being too clumsy. Draft I is an extremely economic set of additional marks, characterzed as follows:

(1) Instead of providing a respective mark for diffrent vowels, a certain class of vowels is given only one mark, which can show their respective pronunciation. This way of marking is based on our classification of the pronunciation of all vowel letters,(single vowel letters and letter combinations pronounced as single vowels are classified into:"compound sound", "long vowel","short vowel—round and unround" and various kinds of "weak vowel"; vowels that go one after another in a particular word are classified into "unit of two successive vowels",
"unit of three successive vowels", and "unit of four successive vowels"). That's why the total number of marks provided
in this draft can be reduced to a minimum.

(2) "stressed strong vowel", "unstressed strong vowel", "un-
stressed weak vowel" and "stressed weak vowel" are four new
concepts established in Draft II The unstressed weak vowels in a
word are left unmarked and the determination of their pronunciation may appeal to reading rules. This is one of our ways to
reduce the number of marks used in a word to a minimum.

(3) Successive vowel letters in a particur word pronounced as
two or more successive vowels are usually made to show their
pronunciations with two or more marks, the number of which
equals that of the vowels.  In Draft II , the successive vowels
are taken as one unit and needs only one mark which can indicate the number of vowels contained in the pronunciation of
these successive vowel letters, and the position of which can
tell whether these successive vowels are one compound vowel
or several single vowels. With these two points made clear,
the pronunciation of these successive vowel letters can thus
be ascertained. This is another way of reducing the marks used
in a word to a minimum.

(4) One mark in Draft II may have several different uses, e.g.
the mark for a stressed strong vowel indicates the position
of the stressed syllable, shows its pronunciation and helps
to determine the pronunciation of those unmarked syllables in
the same word. This is the third way to reduce the marks used
in a word to a minimum.

European Patent Office

**EUROPEAN SEARCH REPORT**

Application number

EP 82 40 1405

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | G 09 B 19/08 |
| A | US-A-3 426 451 (B.HOFFMANN) *Figures 1-4; claims* | 1,2 | G 09 B 17/00 |
| | --- | | |
| A | US-A-4 299 577 (M.L.MARRYMAN) *Figures 1-2; claims* | 1,2 | |
| | --- | | |
| A | US-A-3 715 812 (L.B.NOVAK) *Figures 1-10; claims* | 1,2 | |
| | --- | | |
| A | US-A-3 571 951 (H.A.SIEGEL et al.) *Figures 1-5; claims* | 1,2 | |
| | --- | | |
| A | GB-A-1 138 821 (I.J.PITMAN) *Tables 1-7; claims* | 1,2 | |
| | --- | | TECHNICAL FIELDS SEARCHED (Int. Cl. ³) |
| A | US-A-4 193 212 (H.A.AL-KUFAISHI) *Figure; claim* | 1,2 | G 09 B |
| | ----- | | |

The present search report has been drawn up for all claims

| Place of search THE HAGUE | Date of completion of the search 07-03-1983 | Examiner CARDON A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82